Europäisches Patentamt

European Patent Office

Office européen des brevets

(11) Publication number: **0 061 145**
**B1**

(12) **EUROPEAN PATENT SPECIFICATION**

(45) Date of publication of patent specification: **05.12.84**

(21) Application number: **82102175.5**

(22) Date of filing: **17.03.82**

(51) Int. Cl.³: **F 16 H 55/17, F 16 H 55/44, B 21 D 53/28**

(54) Pulley for cogged belt and method for producing same.

(30) Priority: **23.03.81 JP 40430/81**

(43) Date of publication of application:
**29.09.82 Bulletin 82/39**

(45) Publication of the grant of the patent:
**05.12.84 Bulletin 84/49**

(84) Designated Contracting States:
**DE FR GB**

(56) References cited:
**CH-A- 133 880**
**GB-A-1 142 414**
**US-A-2 729 110**
**US-A-2 931 094**

(73) Proprietor: **NISSAN MOTOR COMPANY, LIMITED**
**No.2, Takara-cho, Kanagawa-ku**
**Yokohama-shi Kanagawa-ken 221 (JP)**

(72) Inventor: **Hayashi, Yoshimasa**
**c/o Oppama Plant of Nissan Motor Co., Ltd.**
**No. 1. Natsushima-cho Yokosuka City (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58**
**D-8000 München 22 (DE)**

Courier Press, Leamington Spa, England.

**Description**

The invention relates to a pulley for a cogged belt, said pulley being of the type as shown in GB—A—1 142 414. Such pulleys are used together with a cogged belt for driving, for example, a cam shaft of an automotive internal combustion engine. Furthermore, the invention relates to a method for the manufacture of the pulley.

The above mentioned GB—A—1 142 414 shows a pulley comprising first and second discs formed of sheet metal and secured with each other to form a unitary structure. Each disc is formed at its peripheral section with a plurality of teeth and the peripheral sections of said first and second discs are so bent that the bent portion of the two discs project generally in the opposite direction to each other.

However, each of the teeth shown in the above reference only include base portions and do not include a base portion which serves as a tooth in the pulley of the type used in a contemporary internal combustion engine. The conventional teeth project vertically from the bent peripheral sections of the two discs and, therefore, no groove is formed below the bottom level of each of said teeth. Furthermore, if the conventional pulley is used in engagement with a cogged belt of the type actually used, only two edge-like teeth will drivingly contact with the cog of the cogged belt so that the cog is urgingly pushed at its mere two narrow surface sections. This will result in damage of the cogs of the belt, thereby shortening the life of the cogged belt.

The invention as claimed is intended to remedy these drawbacks. It solves the problem of how to design a pulley which drivingly contacts with a considerably wide side surface of each cog of the cogged belt, preventing local contact with a cog of the cogged belt.

The advantages offered by the invention as defined in claim 1 are mainly that each tooth of the inventive pulley includes a base portion integral with and extending radially and outwardly from a main body of each disc, and a bent tip portion integral with the base portion. The bent tip portion of each tooth of the first disc and the corresponding bent tip portion of the second disc extend generally in the opposite directions to each other. By virtue of the bent tip portion of the corresponding teeth of the first and second discs which bent portions form a generally T- or Y-shaped tooth, the above mentioned considerably wide surface area is formed at the side surface of the tooth and this prevents the cogged belt from excessive wear.

In addition, by virtue of the base portion of each tooth a considerable depth is formed between the top surface of each tooth and the outer periphery of the main body of each disc. This depth provides a considerable deep groove which is formed between adjacent teeth. This groove is essential between the adjacent teeth of the pulley for driving a cam shaft of an automotive internal combustion engine. Without the above mentioned base portion, no groove is provided between the adjacent teeth and, therefore, each cog of the cogged belt would be out of engagement with the peripheral section of the pulley.

Another aspect of the invention, namely a method of producing such a pulley, is claimed in independent claim 5.

Particular embodiments of the invention are set out in the dependent claims.

The two aspects of the present invention, namely the inventive pulley and the inventive method for the manufacture thereof, are described in detail below with reference to drawings which illustrate preferred embodiments thereof.

Fig. 1 is a front elevation of a conventional pulley for use with a cogged belt;

Fig. 2 is a cross-sectional view of the pulley of Fig. 1;

Fig. 3 is a perspective view of a preferred embodiment of a pulley for use with a cogged pulley, in accordance with the present invention;

Fig. 4 is a front elevation of the pulley of Fig. 3;

Fig. 5 is a cross-sectional view of the pulley of Fig. 3;

Fig. 6 is a front elevation of a disc with teeth before being bent; and

Fig. 7 is a fragmentary sectional view showing another embodiment of the pulley in accordance with the present invention.

Detailed description of the invention

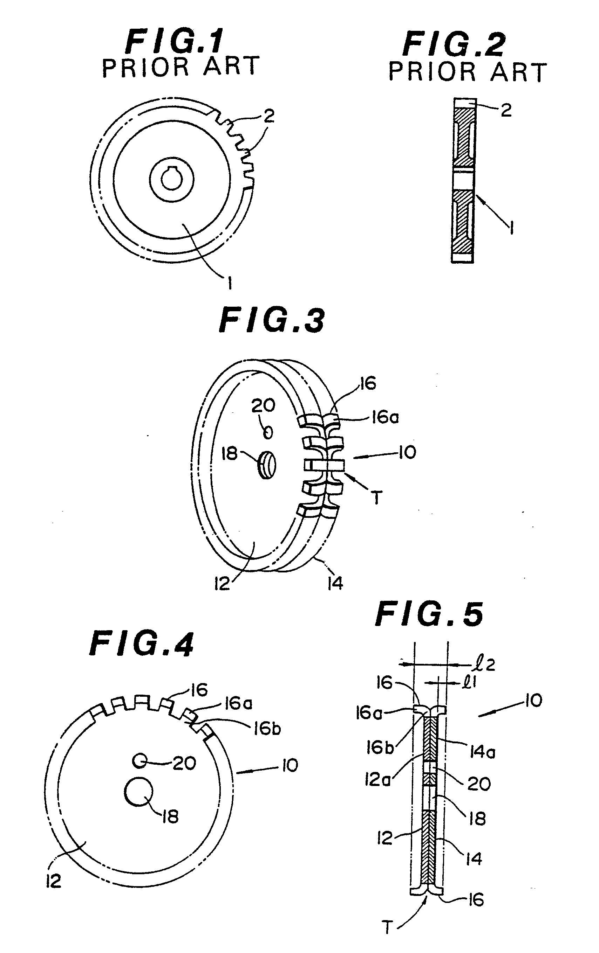

To facilitate understanding the present invention, a brief reference will be made to a conventional pulley for use with a cogged belt (not shown), depicted in Figs. 1 and 2. Referring to Figs. 1 and 2, the pulley 1 is produced by rolling or hobbing a raw material, otherwise by die-casting sintering metal or the like into a predetermined shape.

However, with such a conventional pulley for use with a cogged belt, it is necessary to increase the thickness of not only its boss section and its outer peripheral section where teeth are formed but also the pulley entire, from the standpoints of restriction in production method and of obtaining a predetermined strength. This unavoidably and directly provides an additional mass onto a crankshaft and a camshaft, while contributing to increase in weight and material cost. As a result, a baneful influence is exerted on the vibration of systems including the crankshaft and the camshaft. In case where the baneful influence is extreme, the natural frequency in the torsional vibration of the system is lowered so as to make its resonance vibration, thereby promoting the generation of engine oise.

In view of the above description of the conventional pulley for use with a cogged belt, reference is made to Figs. 3 to 5, wherein a preferred embodiment of a pulley for use with a cogged belt (not shown) is illustrated by the reference numeral 10. The pulley 10 comprises first and second discs 12, 14 which are formed of sheet metal and independent from each other but securely connected with each other at their back or flat main body 12a, 14a to form a single unit. As shown, the first and second discs 12, 14 are united coaxially and generally symmetrical with each other. Each disc is formed at its peripheral section with a plurality of teeth 16 which are located at equal intervals throughout the entire periphery of the disc. The tip portion 16a of each tooth 16 is so bent as to extend outwardly in the direction generally perpendicular to the flat main body 12a, 14a of the disc 12, 14, thus constituting an overhang having a dimension $l_1$. It will be understood that each tooth 16 includes a radially and outwardly extending base portion 16b. Additionally, it will be understood that the tip portions 16a of the corresponding and facing teeth of the first and second discs 12, 14 extend symmetrically in the opposite directions to each other, thus forming a combined tooth T which is generally T-shaped in cross section as illustrated in Fig. 5 where the width of tooth T is indicated by $l_2$. Each disc 12, 14 is formed with a central hole 18 for connection with a crankshaft (not shown) or a camshaft (not shown), and with a hole 20 used for locating purpose which hole is positioned in the vicinity of the central hole 18.

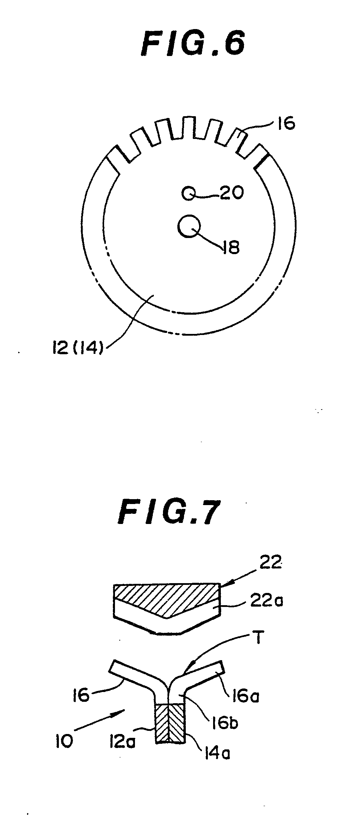

The above-mentioned pulley 10 is, for example, produced as follows: First, each disc 12, 14 is made by stamping out a raw material sheet metal using a press die so that the teeth 16 are formed at the peripheral section of the disc 12, 14 as shown in Fig. 6. Otherwise, the teeth 16 may be formed by machining or cutting the peripheral section after each disc without teeth are stamped out. Subsequently, the tip portion 16a of each tooth 16 is bent outwardly, and thereafter the first and second discs 12, 14 are superposing at their back or main body 12a, 14a one on another in such a manner that the first and second discs 12, 14 are generally symmetrical with each other so that the bent tip portions 16a of the corresponding and facing teeth of the first and second discs 12, 14 extend in the opposite direction to each other and aligned with each other to constitute the above-mentioned combined tooth T which is parallel with the axis of the central opening 18. In this state, the first and second discs 12, 14 are united with each other by means of welding or the like, thus obtaining the pulley 10 for use with the cogged belt.

In locating the teeth 16 so that the tip portions 16a of the corresponding teeth of the first and second discs 12, 14 are in alignment with each other, the opening 20 for locating purpose may be used as a standard. Additionally, the thus located first and second discs 12, 14 may be temporarily connected with each other by means of spot-welding prior to the permanent uniting by the above welding.

With the thus arranged pulley 10, the overhang indicated by the dimension $l_1$ in Fig. 5 can be made smaller. In this connection, since the first and second discs 12, 14 are superposed one on another, the pulley 10 is improved in rigidity as a whole although the above-mentioned dimension $l_1$ is smaller. Furthermore, the dimension $l_2$ indicated in Fig. 5 corresponds to the width of the tooth T which is in engagement with the cogged belt (not shown), thereby effectively preventing the cogged belt from disengaging therefrom. Moreover, it is preferable to interpose between the first and second discs 12, 14 a material high in vibration-damping capacity, for example, hard rubber or urethane resin, thereby effectively suppressing noise generation even if the vibration of the engine itself is transmitted to the pulley 10. It is also preferable that the discs 12, 14 are formed of so-called noise-suppression steel sheet made of ferromagnetic material, in order to further reduce its vibration level.

Fig. 7 shows another embodiment of the pulley in accordance with the present invention, in which the tip portion 16a of each tooth 16 is so bent that an obtuse angle is formed between the tip portion 16a and the flat main body 12a, 14a. Accordingly, the tooth T constituted by the corresponding and facing teeth 16 becomes generally Y-shaped in cross-section as a whole. With this configuration, the cogged belt 22 can be effectively prevented from displacing in its lateral direction or the axial direction of the pulley 10, which is very effective for preventing the belt 22 from disengaging from the teeth T of the pulley 10. This permits the strength of the belt 22 itself to increase, thereby suppressing the vibration of the belt itself. In this case, in order to further increase such an effect, it is preferable that the tooth section 22a of the belt 22 is formed of a material which is high in damping capacity, for example, natural rubber.

It will be appreciated that, in the above-mentioned all embodiments, finishing the teeth T may be accomplished by machining, particularly cutting or rolling, before and after the first and second discs 12, 14 are united as a single unit upon bending of the teeth 16 of each discs 12, 14, thereby improving the finishing accuracy of pulley teeth T. In this case, although the machining must be carried out, the machining is so simple and light as to merely modify the shape of the teeth which have been already formed, and therefore, it is sufficient that the steps for production are noticeably less.

As appreciated from the above, according to the present invention, the pulley is produced by superposing the discs formed of sheet metal so that the discs are united to form a single unit. This greatly contributes to the weight-lightening of the pulley itself and according to the weight-lightening of the engine, thereby suppressing to the minimum level the baneful influence upon the vibration characteristics of the crankshaft and the camshaft. Particularly in case where a high damping capacity material is interposed between a pair of the discs, the vibration of the pulley itself is effectively suppressed, thus preventing noise generation due to the pulley movement.

## Claims

1. A pulley (10) for use with a cogged belt, including first and second discs (12, 14) formed of sheet metal and secured with each other as a single unit, each disc being formed at its peripheral section with a plurality of teeth (16) characterised in that each tooth (16) includes a base portion (16b) integral with and extending radially and outwardly from a main body (12a, 14a) of each disc, and a bent tip portion (16a) integral with said base portion, said bent tip portion of each tooth (16) of said first disc (12) and the corresponding same of said second disc (14) extending generally in the opposite direction to each other.

2. A pulley as claimed in Claim 1, characterized in that said first and second discs (12, 14) are disposed generally symmetrical with each other, in which each tooth bent tip portion (16a) of the first disc (12) and the same of said second disc (14) are aligned in the direction of the axis of said first and second disc to form a combined tooth (T).

3. A pulley as claimed in Claim 2, characterized in that each tooth (16) of said first and second discs (12, 14) is so bent that a generally right angle is formed between said tooth bent tip portion (16a) and the flat surface of said disc main body (12a, 14a) so that said combined tooth (T) is generally T-shaped in cross-section.

4. A pulley as claimed in Claim 3, characterized in that each tooth (16) of said first and second discs (12, 14) is so bent that an obtuse angle is formed between said tooth bent tip portion (16a) and the flat surface of said disc main body (12a, 14a) so that said combined tooth (T) is generally Y-shaped in cross-section.

5. A method of producing a pulley (10) for use with a cogged belt, comprising the following steps of:

producing first and second discs (12, 14) formed of sheet metal;

forming a plurality of teeth (16) at the peripheral section of each of first and second discs (12, 14), superposing said first disc (12) on said second disc (14) so that said first and second discs (12, 14) are located generally symmetrical with each other; and

uniting said first and second discs (12, 14) at their main body (12a, 14a), characterized in that after forming the plurality of teeth (16) each tooth (16) of said first and second discs (12, 14) is bent in such a way that a base portion (16b) integral with said main body (12a, 14a) is left as radially and outwardly extending therefrom, and only a tip portion (16a) is bent such that the bent portion (16a) of each tooth (16) of said first disc (12) and the same of said second disc (14) project generally in the opposite direction to each other.

6. A method as claimed in Claim 5, characterized in that the step of producing said first and second discs (12, 14) is accomplished by stamping out said sheet metal using a press die.

7. A method as claimed in Claim 6, characterized in that the step of forming a plurality of teeth (16) is accomplished simultaneously with the step of producing said first and second discs (12, 14).

8. A method as claimed in Claim 5, characterized in that the step of superposing said first and second discs (12, 14) includes the step of locating said first and second discs (12, 14) so that the bent tip portions (16a) of the corresponding teeth (16) of said first and second discs (12, 14) are aligned with each other in the direction of the axis of said first and second discs (12, 14).

9. A method as claimed in Claim 5, characterized in that the step of uniting said first and second discs (12, 14) is accomplished by means of welding.

10. A method as claimed in Claim 5, further characterized by the step of finishing each tooth (16) of said first and second discs (12, 14).

11. A method as claimed in Claim 10, characterized in that the step of finishing each tooth (16) is accomplished by cutting.

12. A method as claimed in Claim 10, characterized in that the step of finishing each tooth (16) is accomlished by rolling.

13. A method as claimed in Claim 10, charaterized in that the step of finishing each tooth (16) is carried out before the step of uniting said first and second discs (12, 14).

14. A method as claimed in Claim 10, characterized in that the step of finishing each tooth (16) is carried out after the step of uniting said first and second discs (12, 14).

## Revendications

1. Poulie (10) à utiliser avec une courroie dentée, comprenant des premier et second disques (12, 14) formés d'une tôle en métal et fixés l'un à l'autre en une seule unité, chaque disque ayant, à sa section péripherique, un certain nombre de dents (16), caractérisée en ce que dent (16) comprend une partie de base (16b) faisant corps et s'étendant radialement vers l'extérieur d'un corps principal (12a, 14a) de chaque disque, et une partie de bout courbé (16a) faisant corps avec ladite partie de base, ladite partie de bout courbé de chaque dent (16) dudit premier disque (12) et la même partie correspondante dudit second disque (14) s'étendant généralement en direction opposée l'une à l'autre.

2. Poulie selon la revendication 1 caractérisée en ce que lesdits premier et second disques (12, 14) sont disposés généralement symétriquement l'un à l'autre, en ce que chaque partie de bout courbé de dent (16a) du premier disque (12) et la même partie dudit second disque (14) sont alignées dans la direction de l'axe desdits premier et second disques pour former une dent combinée (T).

3. Poulie selon la revendication 2 caractérisée en ce que chaque dent (16) desdits premier et second disques (12, 14) est courbée de façon qu'un angle généralement droit soit formé entre ladite partie de bout courbé de dent (16a) et la surface plate du corps principal du disque (12a, 14a) pour que la dent combinée (T) ait généralement une coupe transversale en forme de T.

4. Poulie selon la revendication 3 caractérisée en ce que chaque dent (16) desdits premier et second disques (12, 14) est courbée de façon qu'un angle obtu soit formé entre ladite partie de bout courbé de la dent (16a) et la surface plate dudit corps principal du disque (12a, 14a) de façon que ladite dent combinée (T) ait généralement une coupe transversale en forme de Y.

5. Procédé de fabrication d'une poulie (10) à utiliser avec une courroie dentée, comprenant les étapes qui suivent de:
produire des premier et second disques (12, 14) formés en métal en tôle;
former un certain nombre de dents (16) à la section périphérique de chacun des premier et second disques (12, 14), en superposant ledit premier disque (12) sur ledit second disque (14) de façon que lesdits premier et second disques (12, 14) soient généralement placés symétriquement l'un à l'autre; et
réunir lesdits premier et second disques (12, 14) à leur corps principal (12a, 14a), caractérisé en ce qu'après avoir formé les diverses dents (16), chaque dent (16) desdits premier et second disques (12, 14) est courbée de façon qu'une partie de base (16b) intégrale avec ledit corps principal (12a, 14a) soit laissée s'étendant radialement vers l'extérieur et seul un bout (16a) soit courbé de façon que la partie courbée (16a) de chaque dent (16) dudit premier disque (12) et la même partie dudit second disque (14) fassent généralement saillie en direction opposée l'une à l'autre.

6. Procédé selon la revendication 5 caractérisé en ce que l'étape de produire lesdits premier et second disques (12, 14) est accomplie en découpant à l'emporte-pièce la tôle de métal en utilisant une matrice d'emboutissage.

7. Procédé selon la revendication 6 caractérisé en ce que l'étape de former un certain nombre de dents (16) est accomplie en même temps que l'étape de produire lesdits premier et second disques (12, 14).

8. Procédé selon la revendication 5 caractérisé en ce que l'étape de superposer lesdits premier et second disques (12, 14) comprend l'étape de placer lesdits premier et second disques (12, 14) de façon que les parties de bout courbé (16a) des dents correspondantes (16) desdits premier et second disques (12, 14) soient alignées l'une avec l'autre dans la direction de l'axe desdits premier et second disques (12, 14).

9. Procédé selon la revendication 5 caractérisé en ce que l'étape de réunir lesdits premier et second disques (12, 14) est accomplie par soudure.

10. Procéduré selon la revendication 5 caractérisé de plus par l'étape de finir chaque dent (16) desdits premier et second disques (12, 14).

11. Procédé selon la revendication 10, caractérisé en ce que l'étape de finir chaque dent (16) est accomplie en découpant.

12. Procédé selon la revendication 10 caractérisé en ce que l'étape de finir chaque dent (16) est accomplie en laminant.

13. Procédé selon la revendication 10 caractérise en ce que l'étape de finir chaque dent (16) est effectuée avant l'étape de réunir les premier et second disques (12, 14).

14. Procédé selon la revendication 10 caractérisé en ce que l'étape de finir chaque dent (16) est effectuée après l'étape de réunir lesdits premier et second disques (12, 14).

**Patentansprüche**

1. Riemenscheibe (10) zur Verwendung mit einem Zahnriemen, mit ersten und zweiten aus Metallblech hergestellten und miteinander zu einer Einheit verbundenen Scheiben (12, 14), wobei an jeder Scheibe im Umfangsbereich eine Vielzahl von Zähnen (16) ausgebildet ist, dadurch gekennzeichnet, daß jeder Zahn (16) einen Basisabschnitt (16b), der sich integral mit und radial sowie nach außen von einem Hauptkörper (12a, 14a) einer jeden Scheibe erstreckt, sowie einen mit dem Basisabschnitt integralen gebogenen Spitzenabschnitt (16a) umfaßt, wobei sich der Spitzenabschnitt eines jeden Zahnes (16) der ersten Scheibe (12) und die Entsprechung der zweiten Scheibe (14) im wesentlichen in einander entgegengesetzte Richtung erstrecken.

2. Riemenscheibe nach Anspruch 1, dadurch gekennzeichnet, daß die erste und zweite Scheibe (12, 14) im wesentlichen symetrisch zueinander angeordnet sind und daß jeder gebogene Zahnspitzenabschnitt (16a) der ersten Scheibe (12) sowie die Entsprechung der zweiten Scheibe (14) in Richtung der Achse der ersten und zweiten Scheibe ausgerichtet sind, um einen kombinierten Zahn (T) zu bilden.

3. Riemenscheibe nach Anspruch 2, dadurch gekennzeichnet, daß jeder Zahn (16) der ersten und zweiten Scheiben (12, 14) so gebogen ist, daß ein im wesentlichen rechter Winkel zwischen dem gebogenen Zahnspitzenabschnitt (16a) und der ebenen Oberfläche des Scheibenhauptkörpers (12a, 14a) ausgebildet ist, so daß der kombinierte Zahn (T) eine im wesentlichen T-förmige Querschnittgestalt aufweist.

4. Riemenscheibe nach Anspruch 3, dadurch gekennzeichnet, daß jeder Zahn (16) der ersten und zweiten Scheiben (12, 14) so gebogen ist, daß ein spitzer Winkel zwischen dem gebogenen Zahnspitzenabschnitt (1a) und der ebenen Oberfläche des Scheibenhauptkörpers (12a, 14a) ausgebildet ist, so daß der kombinierte Zahn (T) eine im wesentlichen Y-förmige Querschnittgestalt besitzt.

5. Verfahren zum Herstellen einer Riemenscheibe (10) zur Verwendung mit einem Zahnriemen, umfassend die folgenden Schritte:

Herstellen von ersten und zweiten Scheiben (12, 14) uas Metallblech;

Ausbilden einer Vielzahl von Zähnen (16) im Umfangsbereich der ersten und zweiten Scheiben (12, 14);

Aufeinanderlegen der ersten Scheibe (12) auf die zweite Scheibe (14), so daß die erste und zweite Scheibe (12, 14) im wesentlichen symetrisch zueinander angeordnet sind; und

Vereinigen der ersten und zweiten Scheiben (12, 14) im Bereich ihrer Hauptkörper (12a, 14a), dadurch gekennzeichnet, daß nach dem Ausbilde der Vielzahl von Zähnen (16) jeder Zahn (16) der ersten und zweiten Scheiben (12, 14) derart gebogen wird, daß ein mit dem Hauptkörper (12a, 14a) integraler Basisabschnitt (16b) übrigbleibt als sich radial und auswärts davon erstreckend, und lediglich ein Spitzenabschnitt (16a) derart gebogen wird, daß der gebogene Abschnitt (16a) eines jeden Zahnes (16) der ersten Scheibe (12) sowie das entsprechende der zweiten Scheibe (14) im wesentlichen in einander entgegengesetzte Richtung vorstehen.

6. Verfahren nach Anspruch 5, dadurch gekennzeichnet, daß das Erzeugen der ersten und zweiten Scheiben (12, 14) durch Ausstanzen aus dem Metallblech unter Verwendung einer Presse ausgeführt wird.

7. Verfahren nach Anspruch 6, dadurch gekennzeichnet, daß das Ausbilden einer Vielzahl von Zähnen (16) gleichzeitig mit dem Erzeugen der ersten und zweiten Scheiben (12, 14) ausgeführt wird.

8. Verfahren nach Anspruch 5, dadurch gekennzeichnet, daß das Übereinanderlegen der ersten und zweiten Scheiben (12, 14) einen Schritt des Anordnens der ersten und zweiten Scheiben (12, 14) derart, daß die gebogenen Spitzenabschnitte (16a) der korrespondierenden Zähne (16) der ersten und zweiten scheiben (12, 14) nacheinander in Richtung der Achse der ersten und zweiten Scheiben (12, 14) ausgerichtet sind, umfaßt.

9. Verfahren nach Anspruch 5, dadurch gekennzeichnet, daß das Vereinigen der ersten und zweiten Scheiben (12, 14) durch Schweißen herbeigeführt wird.

10. Verfahren nach Anspruch 5, ferner gekennzeichnet durch den Schritt des Fertigstellens eines jeden Zahnes (16) der ersten und zweiten Scheiben (12, 14).

11. Verfahren nach Anspruch 10, dadurch gekennzeichnet, daß der Schritt des Fertigstellens eines jeden Zahnes (16) durch Schneiden herbeigeführt wird.

12. Verfahren nach Anspruch 10, dadurch gekennzeichnet, daß der Schritt des Fertigstellens eines jeden Zahnes (16) durch Walzen ausgeführt wird.

13. Verfahren nach Anspruch 10, dadurch gekennzeichnet, daß der Schritt des Fertigstellens eines jeden Zahnes (16) ausgeführt wird, bevor die erste Scheibe und die zweite Scheibe (12, 14) miteinander verbunden werden.

14. Verfahren nach Anspruch 10, dadurch gekennzeichnet, daß das Fertigstellen eines jeden Zahnes (16) ausgeführt wird nachdem die ersten und zweiten Scheiben (12, 14) miteinander vereinigt worden sind.

0 061 145

**FIG.1**
PRIOR ART

2

1

**FIG.2**
PRIOR ART

2

1

**FIG.3**

20

16

16a

18

10

T

12

14

**FIG.4**

16

16a

16b

20

10

18

12

**FIG.5**

l2

l1

16

16a

16b

12a

12

14a

20

18

14

16

T

10

1

# FIG.6

# FIG.7